# DEMANDE DE BREVET EUROPEEN

(11) **EP 4 811 064 A1**
(43) Date de publication de la demande: **23.09.2026**
(21) Numéro de dépôt: 26166274.6
(22) Date de dépôt: 20.03.2026
(51) Int. Cl.: G05B 23/02, G06F 17/16

(54) **PROCÉDÉ DE SURVEILLANCE DE L'ÉTAT DE SANTÉ D'UN SYSTÈME**

(30) Priorité: 21.03.2025 FR 2502943
(71) Demandeur: Commissariat à l'Energie Atomique et aux Energies Alternatives, 75015 Paris (FR)
(72) Inventeur: PREVOST, Guillaume, 38054 Grenoble Cedex 9 (FR)
(74) Mandataire: Lavoix

(57) **Abrégé**

La présente invention concerne un procédé de surveillance de l'état de santé d'un système (10) dans un environnement (E), en l'absence de données historiques relatives au système (10), le système (10) comprenant au moins une machine (14), le procédé étant mis en œuvre par un dispositif de surveillance (12) comprenant un réseau de capteurs (15) dans l'environnement (E) du système (10) et un calculateur (18), le procédé comprenant les étapes suivantes mises en œuvre à différents instants successifs :
- l'acquisition d'un signal par chaque capteur (16) du réseau de capteurs (15),
- la séparation des signaux acquis en sources indépendantes,
- la détermination d'une signature nominale pour les sources indépendantes déterminées, et
- la détection d'éventuelles anomalies pour chaque source à l'instant considéré.

## Description

La présente invention concerne un procédé de surveillance de l'état de santé d'un système. La présente invention concerne aussi un dispositif de surveillance associé.

Le domaine de l'invention est la maintenance prédictive visant à anticiper les opérations de maintenance et réduire le stress économique et humain lié à la panne.

En particulier, lors de la surveillance d'une machine en multi-capteurs, des corrélations parasites peuvent apparaître entre les capteurs. Il convient donc d'extraire les signaux en provenance de la machine des autres signaux.

La surveillance de machines se fait de plus en plus à l'aide de modèles d'intelligence artificielle (IA).

Néanmoins, les limites principales de ces approches basées sur des modèles d'IA sont la dépendance aux données d'entraînement et la qualité de celles-ci.

En outre, l'augmentation de la complexité et la taille des modèles d'IA induit également, en plus de limiter leur embarquabilité, un effet « boîte noire » souvent considéré comme une limite à leur déploiement dans les industries.

Le document CN 119 203 040 A décrit un procédé de détection de pannes de l'état de la technique.

Le but de l'invention est alors de proposer un procédé de surveillance de l'état de santé d'un système fonctionnant sans données historiques relatives au système.

A cet effet, l'invention a pour objet un procédé de surveillance de l'état de santé d'un système dans un environnement, en l'absence de données historiques relatives au système, le système comprenant au moins une machine, le procédé étant mis en œuvre par un dispositif de surveillance comprenant un réseau de capteurs dans l'environnement du système et un calculateur, le procédé comprenant les étapes suivantes mises en œuvre à différents instants successifs :
- l'acquisition d'un signal par chaque capteur du réseau de capteurs, chaque signal acquis étant en provenance d'une ou plusieurs sources indépendantes parmi la au moins une machine et l'environnement, les signaux acquis par le réseau de capteurs formant un vecteur de signaux,
- la séparation des signaux acquis en sources indépendantes en mettant en œuvre les sous-étapes suivantes :
   ∘ le calcul d'un vecteur de moyenne incrémentale en fonction du vecteur de signaux,
   o le calcul d'un vecteur de signaux centré en fonction du vecteur de signaux et du vecteur de moyenne incrémentale,
   o la détermination de vecteurs propres et de valeurs singulières pour le vecteur de signaux,
   o le calcul d'une matrice, dite matrice de blanchiment, en fonction des vecteurs propres et des valeurs singulières déterminés,
   o la détermination de sources indépendantes en fonction du vecteur de signaux centré et de la matrice de blanchiment, les sources indépendantes déterminées formant un vecteur de sources,
- la détermination d'une signature nominale pour les sources indépendantes déterminées en fonction du vecteur de sources, et
- la détection d'éventuelles anomalies pour chaque source, à l'instant considéré, en fonction de la signature nominale et du vecteur de sources.

Suivant d'autres aspects avantageux de l'invention, le procédé comprend une ou plusieurs des caractéristiques suivantes, prises isolément ou suivant toutes les combinaisons techniquement possibles :
- la sous-étape de détermination de vecteurs propres et de valeurs singulières comprend le calcul d'une matrice de covariance incrémentale pour le vecteur de signaux, puis une décomposition en valeurs singulières de la matrice de covariance incrémentale pour obtenir les vecteurs propres et les valeurs singulières.
- la sous-étape de détermination de vecteurs propres et de valeurs propres valeurs singulières est mise en œuvre par un algorithme de descente montée de gradient.
- l'étape de séparation comprend, en outre, une sous-étape de calcul d'une matrice additionnelle en fonction du vecteur de signaux centré et de la matrice de blanchiment de sorte que le produit de la matrice additionnelle et de la matrice de blanchiment forme une matrice de mélange, le vecteur de sources étant le produit du vecteur de signaux centré et de la transposée de la matrice de mélange.
- l'étape de détermination d'une signature est réalisée pour chaque source indépendante et comprend les sous-étapes suivantes :
   o l'extraction, pour chaque source, de caractéristiques temporelles et fréquentielles du vecteur de sources pour former un vecteur de caractéristiques pour chaque source,
   o la projection du vecteur de caractéristiques de chaque source dans un espace de dimension inférieure pour obtenir un vecteur de caractéristiques projeté, et
   ∘ la détermination, pour chaque source, d'une distribution caractérisée par un vecteur moyenne signature et une matrice de covariance signature en fonction du vecteur de caractéristiques projeté, le vecteur moyenne signature et la matrice de covariance signature formant la signature de la source.
- l'étape de détermination d'une signature est réalisée conjointement pour l'ensemble des sources indépendantes déterminées et comprend les sous-étapes suivantes :
   o l'extraction, pour chaque source, de caractéristiques temporelles et fréquentielles du vecteur de sources,
   o la concaténation des caractéristiques extraites pour chaque source en un unique vecteur de caractéristiques,
   ∘ la projection du vecteur de caractéristiques dans un espace de dimension inférieure pour obtenir un vecteur de caractéristiques projeté,
   o la détermination d'une distribution caractérisée par un vecteur moyenne signature et une matrice de covariance signature en fonction du vecteur de caractéristiques projeté, le vecteur moyenne signature et la matrice de covariance signature formant la signature du système.
- l'étape de détection d'éventuelles anomalies comprend à chaque instant le calcul d'une distance de Mahalanobis entre le vecteur de caractéristiques et la signature correspondante caractérisée par un vecteur moyenne signature et une matrice de covariance signature.
- l'étape de détection d'éventuelles anomalies comprend à chaque instant la mise en œuvre d'un algorithme de CUSUM en fonction de la distance de Mahalanobis calculée de sorte à mettre en évidence d'éventuelles anomalies.
- le procédé comprend une étape de caractérisation de chaque anomalie détectée par calcul d'au moins une caractéristique parmi : la sévérité de l'anomalie, la fréquence de l'anomalie, et les signaux du ou des capteurs dans le(s)quel(s) l'anomalie a été détectée.

L'invention a également pour objet un dispositif de surveillance de l'état de santé d'un système dans un environnement, le système comprenant au moins une machine, le dispositif de surveillance comprenant un réseau de capteurs dans l'environnement du système et un calculateur, le dispositif de surveillance étant configuré pour mettre en œuvre un procédé de surveillance tel que décrit précédemment.

L'invention apparaîtra plus clairement à la lecture de la description qui va suivre, donnée uniquement à titre d'exemple non limitatif, et faite en référence aux dessins dans lesquels :
[Fig. 1] la figure 1 est un exemple d'un système comprenant plusieurs machines dans un environnement, et d'un dispositif de surveillance de l'état de santé du système,
[Fig. 2] la figure 2 est un exemple d'un organigramme d'un procédé de surveillance de l'état de santé d'un système,
[Fig. 3] la figure 3 est un exemple à gauche des signaux obtenus pour 8 capteurs, et à droite des sources indépendantes extraites à partir de ces signaux,
[Fig. 4] la figure 4 est une représentation des matrices de corrélation correspondant aux signaux et aux sources de la figure 3,
[Fig. 5] la figure 5 est un graphique illustrant un exemple de convergence au cours du temps de l'erreur quadratique moyenne pour : la moyenne incrémentale, la matrice de covariance incrémentale, et la matrice de blanchiment, ces valeurs ayant été déterminées au cours d'une étape de séparation de sources d'un procédé de surveillance, et
[Fig. 6] la figure 6 est un exemple illustrant les probabilités de détection d'anomalies pour différentes machines d'un système suite à la mise en œuvre du procédé de surveillance.

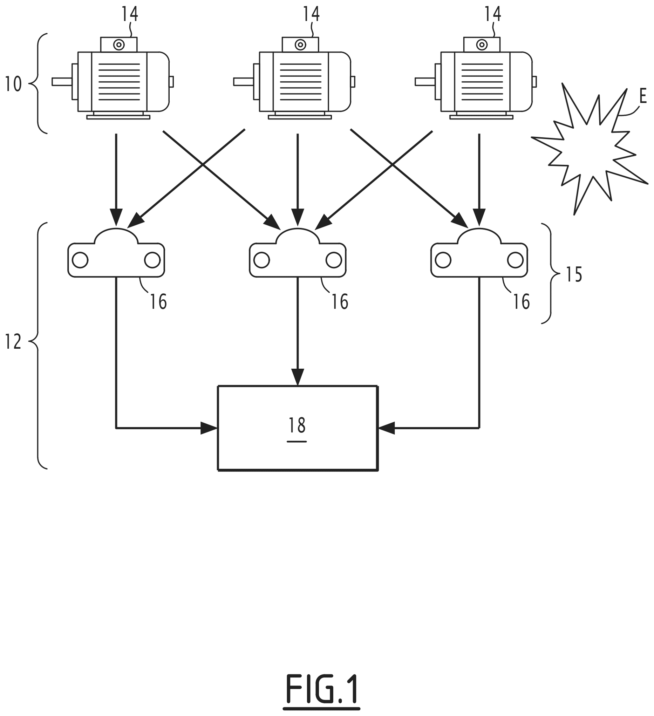

La figure 1 illustre un exemple d'un système 10 à surveiller et d'un dispositif de surveillance 12.

Le système 10 évolue dans un environnement E. L'environnement E est, par exemple, un environnement industriel (usine de production), un environnement en extérieur, un environnement de laboratoire, ou encore un environnement domestique. D'autres types d'environnements sont également possibles.

L'environnement E du système 10 peut être à l'origine de perturbations lors de la surveillance du système 10. Les perturbations sont, par exemple, des vibrations, une température variable, un bruit variable, ou encore la présence de poussières. D'autres types de perturbations sont également possibles.

Le système 10 comprend une ou plusieurs machines 14. Dans l'exemple illustré par la figue 1, le système 10 comprend trois machines 14.

Les machines 14 sont, par exemple, des moteurs, des roulements, des arbres ou tout autre système mécanique et/ou électrique.

Le dispositif de surveillance 12 comprend un réseau de capteurs 15 et un calculateur 18.

Le réseau de capteurs 15 comprend au moins deux capteurs 16. Dans l'exemple illustré par la figure 1, le réseau de capteurs 15 comprend trois capteurs 16.

De préférence, le réseau de capteurs 15 comprend un nombre de capteurs 16 supérieur ou égal au nombre de machines 14 du système 10.

Le réseau de capteurs 15 est positionné dans l'environnement E du système 10, c'est-à-dire qu'il est soumis aux éventuelles perturbations de l'environnement E. Ainsi, comme illustré par la figure 1, chaque capteur 16 est susceptible de recevoir un signal de plusieurs sources indépendantes parmi : les machines 14 du système 10 et l'environnement E. Cette pluralité de sources créent des corrélations parasites qu'il convient d'éliminer pour exploiter les données des capteurs 16, comme cela sera décrit dans la suite de la description.

Les capteurs 16 du réseau sont du même type. Les capteurs 16 sont, par exemple, des capteurs de vibrations ou des capteurs acoustiques. D'autres types de capteurs sont également possibles.

Le calculateur 18 est configuré pour recevoir au cours du temps des données des capteurs 16, et à traiter ces données en mettant en œuvre certaines des étapes d'un procédé de surveillance qui sera décrit dans la suite de la description.

Dans un exemple de réalisation, le calculateur 18 est en interaction avec un produit programme d'ordinateur. Dans cet exemple, le calculateur 18 comporte un processeur comprenant une unité de traitement de données, des mémoires et un lecteur de support d'informations.

Le produit programme d'ordinateur comporte un support d'informations. Le support d'information est un support lisible par le calculateur 18, usuellement par l'unité de traitement de données. Le support lisible d'informations est un médium adapté à mémoriser des instructions électroniques et capable d'être couplé à un bus d'un système informatique. Sur le support d'informations est mémorisé le programme d'ordinateur comprenant des instructions de programme.

Le programme d'ordinateur est chargeable sur l'unité de traitement de données et est adapté pour entraîner la mise en œuvre de certaines des étapes d'un procédé de surveillance qui sera décrit dans la suite de la description, lorsque le programme d'ordinateur est mis en œuvre sur l'unité de traitement du calculateur 18.

Dans une variante, le calculateur 18 est réalisé sous la forme d'un circuit intégré ou d'un circuit imprimé.

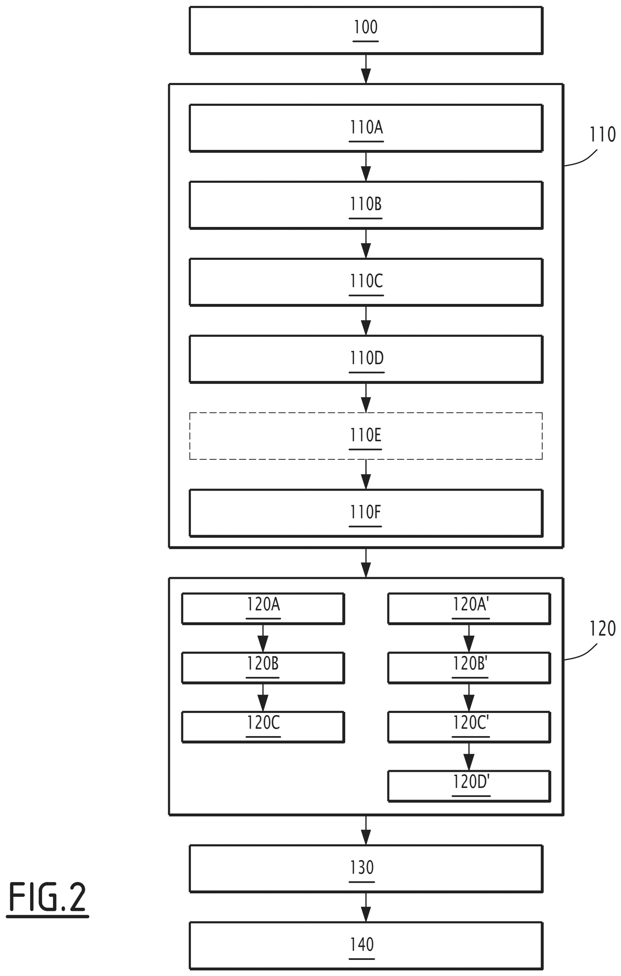

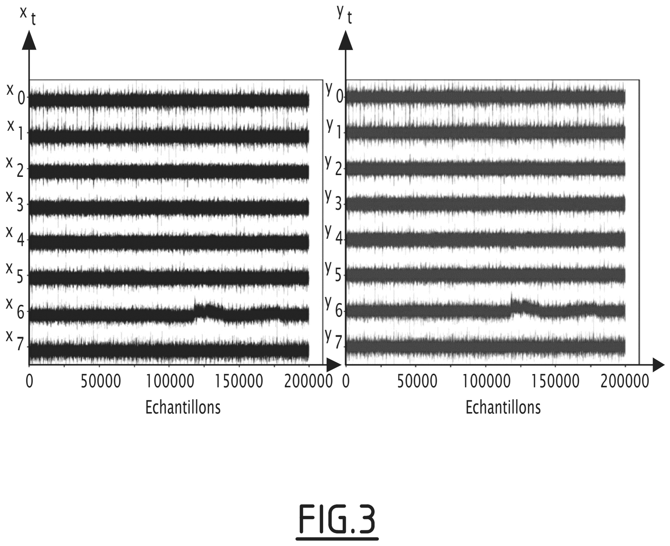

Un procédé de surveillance mis en œuvre par le dispositif de surveillance 12 va maintenant être décrit, en référence à l'organigramme de la figure 2, et aux figures 3 à 6 qui sont des résultats expérimentaux obtenus suite à la mise en œuvre du procédé de surveillance.

Le procédé de surveillance comprend différentes étapes décrites dans ce qui suit, qui sont répétées au cours du temps, c'est-à-dire mises en œuvre à différents instants successifs.

Le procédé de surveillance comprend une étape 100 d'acquisition d'un signal par chaque capteur 16 du réseau de capteurs 15.

Chaque signal acquis est en provenance d'une ou plusieurs sources indépendantes parmi la au moins une machine 14 et l'environnement E. Par sources indépendantes, il est entendu des sources non corrélées entre elles. Les signaux acquis seuls ne permettent pas de remonter aux sources indépendantes dont ils sont issus.

Les signaux acquis par le réseau de capteurs 15 forment un vecteur de signaux xt. Par exemple, le signal reçu à l'instant t par le premier capteur correspond à la première ligne du vecteur de signaux xt, le signal reçu à l'instant t par le deuxième capteur correspond à la première ligne du vecteur de signaux xt, et ainsi de suite.

Le procédé de surveillance comprend une étape 110 de séparation des signaux acquis en sources indépendantes, c'est-à-dire que l'on va séparer les signaux en fonction des sources indépendantes de provenance. La séparation des signaux est effectuée de façon incrémentale, c'est-à-dire que chaque nouveau vecteur de signaux xt entrant permet de mettre à jour les données de l'algorithme, mais n'est ensuite pas mémorisé en tant que tel. L'étape 110 est, par exemple, mise en œuvre par le calculateur 18.

Le nombre de sources indépendantes accessibles lors de l'étape de séparation 110 est au plus égal au nombre de capteurs 16.

L'étape de séparation 110 est réalisée soit sur des vecteurs de signaux xt individuels, soit sur des groupes (en anglais batch) de vecteurs de signaux xₜ, auquel cas les vecteurs de signaux sont par exemple concaténés.

L'étape de séparation 110 comprend un ensemble de sous-étapes qui sont décrites dans ce qui suit.

L'étape de séparation 110 comprend une sous-étape 110A de calcul d'un vecteur de moyenne incrémentale µₜ en fonction du vecteur de signaux xt. La moyenne incrémentale est la moyenne d'un ensemble de données qui est mise à jour au fur et à mesure que de nouvelles données sont ajoutées, sans avoir à recalculer la moyenne de l'ensemble complet de données. L'utilisation de la moyenne incrémentale permet donc de s'affranchir d'une base de données historiques relative au système 10.

Dans un exemple de mise en œuvre, le vecteur de moyenne incrémentale µₜ est calculé à chaque instant (ou à chaque itération, c'est-à-dire à chaque réception d'un nouveau vecteur de signaux xt ou batch de vecteurs de signaux) sur la base de la formule suivante : ${μ}_{t} = \left(1-λ\right) {μ}_{t - 1} + λ \left({x}_{t}-{μ}_{t - 1}\right)$

Où:
- λ est un taux d'apprentissage prédéfini,
- *µ*_{*t-*1} est le vecteur de moyenne incrémentale à l'instant précédent, et
- *xₜ* est le vecteur de signaux à l'instant courant.

Dans cet exemple, le taux d'apprentissage est prédéfini, par exemple compris entre 10⁻² ou 10⁻³.

En variante, le taux d'apprentissage varie à chaque itération (c'est-à-dire pour chaque nouveau vecteur de signaux xt ou batch de vecteurs de signaux), et est donné par la formule suivante : ${λ}_{t} = max \left({λ}_{min}, \frac{1}{n + 1}\right)$

Où:
- *λₘᵢₙ* est une valeur prédéfinie entre 0 et 1, et
- n est une valeur nulle à l'initialisation et incrémentée de 1 à chaque itération.

L'étape de séparation 110 comprend une sous-étape 110B de calcul d'un vecteur de signaux centré ${{x}_{t}}^{˜}$ en fonction du vecteur de signaux xt et du vecteur de moyenne incrémentale µₜ.

Le vecteur de signaux centré ${{x}_{t}}^{˜}$ est, par exemple, la différence entre le vecteur de signaux xt et le vecteur de moyenne incrémentale µₜ : ${{x}_{t}}^{˜} = {x}_{t} - {μ}_{t}$*.*

L'étape de séparation 110 comprend une sous-étape 110C de détermination de vecteurs propres U et de valeurs singulières Λ pour le vecteur de signaux xt.

Dans un exemple de mise en œuvre, la sous-étape de détermination de vecteurs propres U et de valeurs singulières Λ comprend le calcul d'une matrice de covariance incrémentale Σₜ pour le vecteur de signaux xt. Une matrice de covariance incrémentale est une matrice de covariance d'un ensemble de données qui est mise à jour au fur et à mesure que de nouvelles données sont ajoutées, sans avoir à recalculer matrice de covariance de l'ensemble complet de données. L'utilisation de la matrice de covariance incrémentale permet donc de s'affranchir d'une base de données historiques relative au système 10.

Dans un exemple de mise en œuvre, la matrice de covariance incrémentale Σₜ est calculée sur la base de la formule suivante : ${Σ}_{t} = \left(1-λ\right) {Σ}_{t - 1} + λ \left(1-λ\right) \left({x}_{t}-{μ}_{t - 1}\right) {\left({x}_{t}-{μ}_{t - 1}\right)}^{T}$ Où:
- λ est un taux d'apprentissage prédéfini,
- *Σ*_{*t-*1} est la matrice de covariance à l'instant précédent,
- *xₜ* est le vecteur de signaux à l'instant courant, et
- *µ*_{*t-*1} est le vecteur de moyenne incrémentale à l'instant précédent.

Dans cet exemple, le taux d'apprentissage est prédéfini, par exemple compris entre 10⁻² ou 10⁻³. En variante, le taux d'apprentissage varie à chaque itération, et est donné par la formule suivante : ${λ}_{t} = max \left({λ}_{min}, \frac{1}{n + 1}\right)$

Où:
- *λₘᵢₙ* est une valeur prédéfinie entre 0 et 1, et
- *n* est une valeur nulle à l'initialisation et incrémentée de 1 à chaque itération.

La matrice de covariance incrémentale Σₜ est ensuite décomposée en valeurs singulières pour obtenir les vecteurs propres U et les valeurs singulières Λ. La décomposition en valeurs singulières est donnée par la formule suivante : *Σₜ = UΛU^{T}.*

Dans une variante de mise en œuvre, la détermination de vecteurs propres U et de valeurs singulières Λ pour le vecteur de signaux xt est réalisée sans calcul de la matrice de covariance. Dans ce cas, un algorithme de montée de gradient est utilisé. En entrée, l'algorithme n'a besoin que du vecteur xt, et d'un taux d'apprentissage défini (par exemple compris entre 10⁻² et 10⁻³).

L'étape de séparation 110 comprend une sous-étape 110D de calcul d'une matrice, dite matrice de blanchiment Ω, en fonction des vecteurs propres U et des valeurs singulières déterminés Λ. Une matrice de blanchiment est une matrice utilisée pour transformer un ensemble de données afin qu'elles deviennent des variables indépendantes et de variance unitaire. En d'autres termes, elle permet de blanchir les données, c'est-à-dire de leur donner une distribution de moyenne nulle et de variance unitaire, tout en éliminant toute corrélation entre les variables.

Dans un exemple de mise en œuvre, la matrice de blanchiment Ω est donnée par la formule suivante : Ω = UΛ^{-1/2}*U^{T}.*

Optionnellement, l'étape de séparation 110 comprend une sous-étape 110E de calcul d'une matrice additionnelle W en fonction du vecteur de signaux centré ${{x}_{t}}^{˜}$ et de la matrice de blanchiment Ω de sorte que le produit de la matrice additionnelle W et de la matrice de blanchiment Ω forme une matrice de mélange M. La sous-étape 110E est optionnelle, mais permet d'affiner la détermination des sources.

Dans un exemple de mise en œuvre, la matrice additionnelle W a été initialisée et comprend un nombre de lignes égal au nombre de capteurs 16. L'initialisation est par exemple telle que : *W = I* + 0,01. *N*(0,1) où I désigne la matrice identité, et *N*(0,1) représente une loi normale de moyenne égale à 0 et de variance égale à 1. Ces valeurs d'initialisation sont données à titre d'exemple, et d'autres valeurs d'initialisation sont possibles.

Dans un exemple, les composantes de chaque ligne d'indice i de la matrice additionnelle W sont ensuite calculées de la manière suivante :
- la définition d'un vecteur ligne intermédiaire wᵢ égal au vecteur ligne d'indice i de la matrice additionnelle W, noté W[i, :].
- la mise à jour du vecteur ligne intermédiaire wᵢ par le résultat de la formule suivante : ${z}^{T} g \left({w}_{i}^{T}z\right) - E \left[g\left({w}_{i}^{T}z\right)\right] . {w}_{i}$
   où :
   ∘ *z* = *x̃Ω^{T}*,
   ∘ ${{x}_{t}}^{˜}$ est le vecteur de signaux centré,
   o *Ω* est la matrice de blanchiment,
   ∘ *X^{T}* est la transposée de X,
   o *g* est une fonction de non-linéarité. La fonction g est par exemple une fonction de non linéarité, telle qu'une tangente hyperbolique
   ∘ $E \left(X\right)$ est l'espérance de X,
- la mise à jour du vecteur ligne intermédiaire wᵢ par le résultat de la formule suivante : ${w}_{i} - {\sum }_{j = 1}^{i - 1} \left({w}_{j}^{T}{w}_{i}\right) {w}_{i}$
- la mise à jour du vecteur ligne intermédiaire wᵢ par le résultat de la formule suivante : $\frac{{w}_{i}}{\left‖{w}_{i}\right‖}$
- la mise à jour de chaque composante du vecteur ligne d'indice i de la matrice intermédiaire par le résultat de la formule suivante : $λ . {w}_{i} + \left(1-λ\right) . W \left[i,:\right]$ où :
   ∘ λ est un taux d'apprentissage prédéfini, et
   ∘ *W*[*i,*:] est le vecteur ligne d'indice i de la matrice additionnelle W.

Dans cet exemple, le taux d'apprentissage est prédéfini, par exemple compris entre 10⁻² ou 10⁻³. En variante, le taux d'apprentissage varie à chaque itération (c'est-à-dire pour chaque nouveau vecteur de signaux xt), et est donné par la formule suivante : ${λ}_{t} = max \left({λ}_{min}, \frac{1}{n + 1}\right)$

Où :
- *λₘᵢₙ* est une valeur prédéfinie entre 0 et 1, et
- n est une valeur nulle à l'initialisation et incrémentée de 1 à chaque itération.

L'étape de séparation 110 comprend une sous-étape 110F de détermination de sources indépendantes en fonction du vecteur de signaux centré ${{x}_{t}}^{˜}$ et de la matrice de blanchiment Ω. Les sources indépendantes déterminées forment un vecteur de sources yₜ.

Dans un exemple de mise en œuvre en l'absence de la sous-étape 110E, le vecteur de sources yₜ est donné par la formule suivante : ${y}_{t} = {{x}_{t}}^{˜} {Ω}^{T}$.

Dans un autre exemple de mise en œuvre, lorsque la sous-étape 110F est mise en œuvre, le vecteur de sources yₜ est le produit du vecteur de signaux centré ${{x}_{t}}^{˜}$ et de la transposée de la matrice de mélange M, donné par la formule suivante : ${y}_{t} = {{x}_{t}}^{˜} {\left(WΩ\right)}^{T} = {{x}_{t}}^{˜} {M}^{T}$ *.*

Le procédé de surveillance comprend une étape 120 de détermination d'une signature nominale pour les sources indépendantes déterminées en fonction du vecteur de sources yₜ. Une signature nominale pour une source est un ensemble de caractéristiques qui décrivent les propriétés ou l'identité de la source parmi un ensemble de sources indépendantes. L'étape 120 est, par exemple, mise en œuvre par le calculateur 18.

Dans un exemple de mise en œuvre, l'étape 120 de détermination d'une signature est réalisée pour chaque source indépendante (une signature par source indépendante) et comprend les différentes sous-étapes suivantes.

L'étape de détermination comprend une sous-étape 120A d'extraction, pour chaque source, de caractéristiques temporelles et fréquentielles du vecteur de sources yₜ pour former un vecteur de caractéristiques ct pour chaque source.

Les caractéristiques temporelles sont, par exemple, la dispersion de la source (RMS pour root mean square erreur en anglais, traduit en français par moyenne quadratique), le taux de changement de signe de la source (ZCR), le kurtose (qui mesure l'aplatissement et l'étroitesse d'une distribution), ou encore le facteur de crête (rapport entre la valeur absolue maximale d'une distribution et son écart-type).

Les caractéristiques fréquentielles sont, par exemple, le spectre de fréquences de la source, la composante de fréquence dominante ou encore largeur de bande.

L'étape de détermination comprend une sous-étape 120B de projection du vecteur de caractéristiques ct de chaque source dans un espace de dimension inférieure, pour obtenir un vecteur de caractéristiques projeté cₜ^{p}. Cela permet de réduire la puissance de calcul nécessaire, et d'améliorer la robustesse de l'algorithme. La projection est, par exemple, réalisée par une analyse en composantes principales incrémentale.

L'étape de détermination comprend une sous-étape 120C de détermination, pour chaque source, d'une distribution caractérisée par un vecteur moyenne signature µₜ^{(s)} et une matrice de covariance signature Σₜ^{(s)} en fonction du vecteur de caractéristiques projeté cₜ^{p}. Le vecteur moyenne signature µₜ^{(s)} et la matrice de covariance signature Σₜ^{(s)} forment la signature de la source.

Le vecteur moyenne signature µₜ^{(s)} et la matrice de covariance signature Σₜ^{(s)} sont, par exemple, déterminés par un algorithme de montée de gradients avec un taux d'apprentissage dégressif.

Dans un exemple, le vecteur moyenne signature µₜ^{(s)} est calculé sur la base de la formule suivante : ${{μ}_{t}^{\left(s\right)} = \left(1-{λ}_{t}\right) {μ}_{t - 1}^{\left(s\right)} + {λ}_{t} \left({c}_{t}^{P}-{μ}_{t - 1}^{\left(s\right)}\right)}_{¯}$

Où:
- *λₜ* est un taux d'apprentissage tel que ${λ}_{t} = max \left({λ}_{min}, \frac{1}{n + 1}\right)$,
- *λₘᵢₙ* est une valeur prédéfinie entre 0 et 1,
- *n* est une valeur nulle à l'initialisation et incrémentée de 1 à chaque itération,
- ${μ}_{t - 1}^{\left(s\right)}$ est le vecteur moyenne signature à l'instant précédent , et
- ${c}_{t}^{p}$ est le vecteur de caractéristiques projeté à l'instant courant.

Dans un exemple, la matrice de covariance signature Σₜ^{(s)} est calculée sur la base de la formule suivante : ${Σ}_{t}^{\left(s\right)} = \left(1-{λ}_{t}\right) {Σ}_{t - 1}^{\left(s\right)} + {λ}_{t} \left(1-{λ}_{t}\right) \left({c}_{t}^{p}-{μ}_{t - 1}^{\left(s\right)}\right) {\left({c}_{t}^{p}-{μ}_{t - 1}^{\left(s\right)}\right)}^{T}$ Où:
- les notations sont les mêmes que pour le vecteur moyenne signature µₜ^{(s)}, et
- ${Σ}_{t - 1}^{\left(s\right)}$ est la matrice de covariance signature à l'instant précédent.

En variante, le vecteur moyenne signature µₜ^{(s)} et la matrice de covariance signature Σₜ^{(s)} sont calculées avec un algorithme de Welford.

En variante, la sous-étape 120B (projection) est optionnelle, et la sous-étape 120C est réalisée directement sur le vecteur de caractéristiques ct.

En complément, ou en variante, l'étape 120 de détermination d'une signature est réalisée conjointement pour l'ensemble des sources indépendantes déterminées. La détermination d'une signature conjointe permet, si la puissance de calcul est suffisante, une détection plus fine et robuste de la dérive en utilisant les informations de corrélation entre les sources, aux dépends d'une complexité temporelle plus élevée. L'étape 120 de détermination comprend alors :
- une sous-étape 120A' d'extraction, pour chaque source, de caractéristiques temporelles et fréquentielles du vecteur de sources yt. Cette sous-étape est identique à la sous-étape 120A.
- une sous-étape 120B' de concaténation des caractéristiques extraites pour chaque source en un unique vecteur de caractéristiques.
- une sous-étape 120C' de projection du vecteur de caractéristiques dans un espace de dimension inférieure. Cette sous-étape 120C' est similaire à la sous-étape 120B.
- une sous-étape 120D' de détermination d'une distribution caractérisée par un vecteur moyenne signature µₜ^{(s)} et une matrice de covariance signature Σₜ^{(s)} en fonction du vecteur de caractéristiques projeté, le vecteur moyenne signature µₜ^{(s)} et la matrice de covariance signature Σₜ^{(s)} formant la signature du système 10. Cette sous-étape 120D' est similaire à la sous-étape 120C.

En variante, la sous-étape 120C' (projection) est optionnelle, et la sous-étape 120D' est réalisée directement sur le vecteur de caractéristiques ct.

Le procédé de surveillance comprend une étape 130 de détection d'éventuelles anomalies pour chaque source, à l'instant considéré, en fonction de la signature nominale et du vecteur de sources yₜ. Cette étape 130 permet de quantifier l'état du système 10 au cours du temps par rapport à son fonctionnement nominal appris (signature), et de détecter une éventuelle dégradation progressive. L'étape 130 est, par exemple, mise en œuvre par le calculateur 18.

Dans un exemple de mise en oeuvre, l'étape de détection 130 comprend à chaque instant le calcul d'une distance de Mahalanobis entre le vecteur de caractéristiques (projeté ou non) et la signature correspondante caractérisée par un vecteur moyenne signature µₜ^{(s)} et une matrice de covariance signature Σₜ^{(s)}. En fonction des signatures qui ont été calculées, la distance de Mahalonobis est calculée par source ou pour le système 10.

La distance de Mahalanobis à l'instant courant *mₜ* est, par exemple, donnée pour un vecteur de caractéristiques projeté ${c}_{t}^{p}$*,* par la formule suivante : ${m}_{t} = \sqrt{{\left({c}_{t}^{p}-{μ}_{t}^{\left(s\right)}\right)}^{T} {\left({Σ}_{t}^{\left(s\right)}\right)}^{- 1} \left({c}_{t}^{p}-{μ}_{t}^{\left(s\right)}\right)}$, où les notations sont les mêmes que précédemment. Cette formule est valable en remplaçant le vecteur de caractéristiques projeté cₜ^{p} par le vecteur de caractéristiques ct en l'absence de projection. Cette formule est aussi valable pour chaque source ou pour le système 10 en fonction de la signature considérée.

De préférence, l'étape de détection 130 comprend à chaque instant la mise en œuvre d'un algorithme de CUSUM en fonction de la distance de Mahalanobis calculée de sorte à mettre en évidence d'éventuelles anomalies. CUSUM (de l'anglais Cumulative Sum traduit en français par somme cumulative) est un algorithme utilisé pour détecter des changements ou des ruptures dans une séquence de données. La somme cumulative est par exemple calculée avec la formule suivante : ${S}_{t} = max \left(0,{S}_{t - 1}-{X}^{2}+ α , {N}_{f}{m}_{t}^{2}\right)$

Où :
- *Sₜ* est la somme cumulative à l'instant courant,
- *S*_{*t*-1} est la somme cumulative à l'instant précédent (initialement *S*₀ = 0),
- *χ*² *_{α,N_{f}}* est une loi de probabilité définissant la sensibilité de l'algorithme de CUSUM, *χ*² *_{α,N_{f}}* est la valeur critique de la loi du *χ*² pour *α* un seuil défini par l'utilisateur entre 0 et 1, et N_{f} la taille du vecteur xt,
- *mₜ* est la distance de Mahalanobis calculée précédemment.

En variante, la détection des anomalies est réalisée sans algorithme de CUSUM par comparaison de la distance de Mahalanobis à un seuil de détection prédéfini. Néanmoins, l'algorithme de CUSUM permet une détection plus fine et progressive que le seuil de détection.

Optionnellement, le procédé comprend une étape 140 de caractérisation des anomalies détectées. L'étape 140 est, par exemple, mise en œuvre par le calculateur 18.

Dans un exemple de mise en œuvre, au moins l'une des caractéristiques suivantes est déterminée pour caractériser chaque anomalie :
- la sévérité de l'anomalie qui est définie comme l'intensité d'un changement détecté. La sévérité est, par exemple, donnée par la formule suivante : ${a}_{t} = 1 - {F}_{{X}^{2}} \left({m}_{t}^{2}\right)$ *Où : Fχ_{₂}* est la fonction de répartition de la loi du *χ²,*
- la fréquence de l'anomalie, et
- les signaux des capteurs 16 dans lesquels l'anomalie a été détectée. Ces signaux sont par exemple donnés par la formule suivante : $\hat{{x}_{t}} = {y}_{t} {\left(WΩ\right)}^{- 1} + {μ}_{t}$.

Le procédé de surveillance décrit précédemment a été testé sur des données expérimentale issues de l'article Hai Qiu, Jay Lee, Jing Lin. "Wavelet Filter-based Weak Signature Detection Method and its Application on Roller Bearing Prognostics." Journal of Sound and Vibration 289 (2006). Dans cet article, les auteurs mettent à disposition les données de 8 capteurs de vibrations de 4 roulements à billes sur le même arbre. Les données sont recueillies par batchs de 20480 échantillons toutes les minutes.

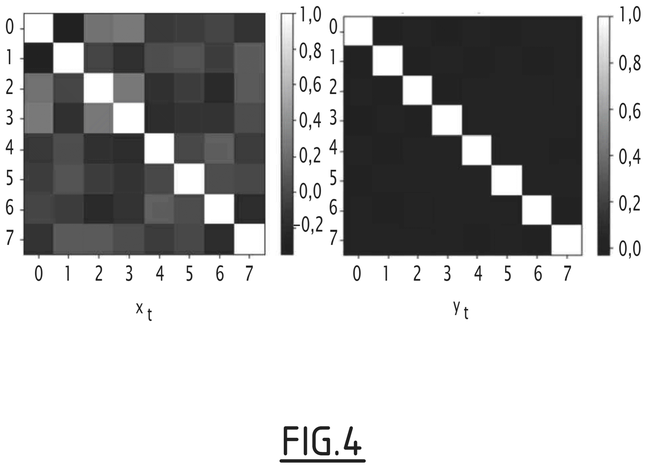

La figure 3 illustre à gauche les signaux vibratoires transmis par les capteurs (issus des données de l'article), et à droite les sources extraites par l'étape 110 de séparation de sources du présent procédé (avec calcul d'une matrice de covariance, et d'une matrice additionnelle). La figure 4 illustre à gauche la matrice de corrélation pour les signaux vibratoires des capteurs, et à droite la matrice de corrélation pour les sources extraites. Les résultats de la simulation sont sans équivoque sur les performances de la séparation de sources incrémentale de l'invention, avec 99.16% des corrélations parasites éliminées.

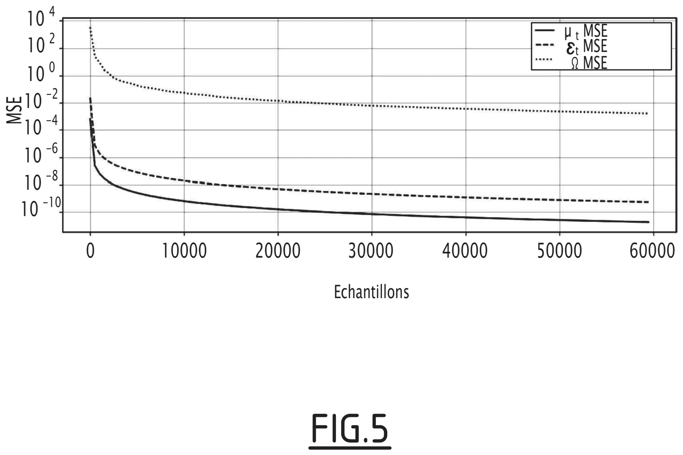

La figure 5 illustre la convergence de la moyenne incrémentale, de la matrice de covariance incrémentale, et de la matrice de blanchiment dans l'étape 110 de séparation de sources. Comme visible sur cette figure, la convergence est atteinte rapidement puisque l'erreur est satisfaisante (<0.01) en deux secondes d'acquisition seulement (taux d'échantillonnage de 20kHz).

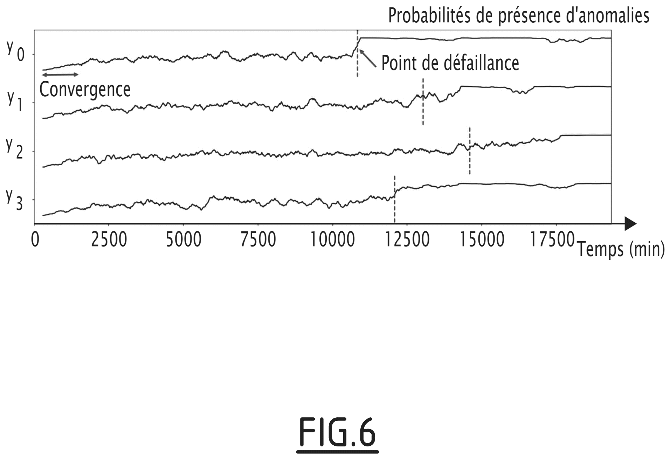

La figure 6 présente les résultats finaux de la simulation. Il est visible qu'un avertissement est provoqué en premier lieu sur le roulement 1 (y₀), bien en amont de la fin de l'expérience (rupture du composant). La courbe noire représente une moyenne mobile de la probabilité d'anomalie, et le seuil de détection de l'algorithme CUSUM est indiqué en pointillés. L'algorithme CUSUM propose un seuil de détection de dérive plus fin qu'un simple seuillage du signal d'anomalies.

Ainsi, le procédé de surveillance permet de surveiller une ou plusieurs machines 14 en multi-capteurs de façon robuste (grâce à la séparation de sources qui permet d'isoler le bruit et les éléments parasites) et sans données historiques. Elle trouve sa place dans un contexte de maintenance prédictive, principalement en cas de mémoire limitée, par exemple dans le cas d'une solution embarquée. Elle est également d'intérêt lorsque peu d'informations préalables sur le système 10 à surveiller sont disponibles.

L'homme du métier comprendra que les modes de réalisation décrits précédemment sont combinables entre eux.

## Revendications

1. Procédé de surveillance de l'état de santé d'un système (10) dans un environnement (E), en l'absence de données historiques relatives au système (10), le système (10) comprenant au moins une machine (14), le procédé étant mis en œuvre par un dispositif de surveillance (12) comprenant un réseau de capteurs (15) dans l'environnement (E) du système (10) et un calculateur (18), le procédé comprenant les étapes suivantes mises en œuvre à différents instants successifs :
a. l'acquisition d'un signal par chaque capteur (16) du réseau de capteurs (15), chaque signal acquis étant en provenance d'une ou plusieurs sources indépendantes parmi la au moins une machine (14) et l'environnement (E), les signaux acquis par le réseau de capteurs (15) formant un vecteur de signaux (xt),
b. la séparation des signaux acquis en sources indépendantes en mettant en œuvre les sous-étapes suivantes :
i. le calcul d'un vecteur de moyenne incrémentale (µₜ) en fonction du vecteur de signaux (xₜ),
ii. le calcul d'un vecteur de signaux centré ( ${{x}_{t}}^{˜}$) en fonction du vecteur de signaux (xt) et du vecteur de moyenne incrémentale (µₜ),
iii. la détermination de vecteurs propres (U) et de valeurs singulières (Λ) pour le vecteur de signaux (xt),
iv. le calcul d'une matrice, dite matrice de blanchiment (Ω), en fonction des vecteurs propres (U) et des valeurs singulières déterminés (Λ),
v. la détermination de sources indépendantes en fonction du vecteur de signaux centré ( ${{x}_{t}}^{˜}$) et de la matrice de blanchiment (Ω), les sources indépendantes déterminées formant un vecteur de sources (yt),
c. la détermination d'une signature nominale pour les sources indépendantes déterminées en fonction du vecteur de sources (yt), et
d. la détection d'éventuelles anomalies pour chaque source, à l'instant considéré, en fonction de la signature nominale et du vecteur de sources (yt).

2. Procédé selon la revendication 1, dans lequel la sous-étape de détermination de vecteurs propres (U) et de valeurs singulières (Λ) comprend le calcul d'une matrice de covariance incrémentale (Σₜ) pour le vecteur de signaux (xt), puis une décomposition en valeurs singulières de la matrice de covariance incrémentale (Σₜ) pour obtenir les vecteurs propres (U) et les valeurs singulières (Λ).

3. Procédé selon la revendication 1, dans lequel la sous-étape de détermination de vecteurs propres (U) et de valeurs singulières (Λ) est mise en œuvre par un algorithme de montée de gradient.

4. Procédé selon l'une quelconque des revendications 1 à 3, dans lequel l'étape de séparation comprend, en outre, une sous-étape de calcul d'une matrice additionnelle (W) en fonction du vecteur de signaux centré ( ${{x}_{t}}^{˜}$) et de la matrice de blanchiment (Ω) de sorte que le produit de la matrice additionnelle (W) et de la matrice de blanchiment (Ω) forme une matrice de mélange (M), le vecteur de sources (yt) étant le produit du vecteur de signaux centré ( ${{x}_{t}}^{˜}$) et de la transposée de la matrice de mélange (M).

5. Procédé selon l'une quelconque des revendications 1 à 4, dans lequel l'étape de détermination d'une signature est réalisée pour chaque source indépendante et comprend les sous-étapes suivantes :
a. l'extraction, pour chaque source, de caractéristiques temporelles et fréquentielles du vecteur de sources (yt) pour former un vecteur de caractéristiques (ct) pour chaque source,
b. la projection du vecteur de caractéristiques (ct) de chaque source dans un espace de dimension inférieure pour obtenir un vecteur de caractéristiques projeté (cₜ^{p}), et
c. la détermination, pour chaque source, d'une distribution **caractérisée par** un vecteur moyenne signature (µₜ^{(s)}) et une matrice de covariance signature (Σₜ^{(s)}) en fonction du vecteur de caractéristiques projeté (cₜ^{p}), le vecteur moyenne signature (µₜ^{(s)}) et la matrice de covariance signature (Σₜ^{(s)}) formant la signature de la source.

6. Procédé selon l'une quelconque des revendications 1 à 5, dans lequel l'étape de détermination d'une signature est réalisée conjointement pour l'ensemble des sources indépendantes déterminées et comprend les sous-étapes suivantes :
a. l'extraction, pour chaque source, de caractéristiques temporelles et fréquentielles du vecteur de sources (yt),
b. la concaténation des caractéristiques extraites pour chaque source en un unique vecteur de caractéristiques (cₜ),
c. la projection du vecteur de caractéristiques (ct) dans un espace de dimension inférieure pour obtenir un vecteur de caractéristiques projeté (cₜ^{p}),
d. la détermination d'une distribution **caractérisée par** un vecteur moyenne signature (µₜ^{(s)}) et une matrice de covariance signature (Σₜ^{(s)}) en fonction du vecteur de caractéristiques projeté (cₜ^{p}), le vecteur moyenne signature (µₜ^{(s)}) et la matrice de covariance signature (Σₜ^{(s)}) formant la signature du système (10).

7. Procédé selon la revendication 5 ou 6, dans lequel l'étape de détection d'éventuelles anomalies comprend à chaque instant le calcul d'une distance de Mahalanobis entre le vecteur de caractéristiques et la signature correspondante **caractérisée par** un vecteur moyenne signature (µₜ^{(s)}) et une matrice de covariance signature (Σₜ^{(s)}).

8. Procédé selon la revendication 7, dans lequel l'étape de détection d'éventuelles anomalies comprend à chaque instant la mise en œuvre d'un algorithme de CUSUM en fonction de la distance de Mahalanobis calculée de sorte à mettre en évidence d'éventuelles anomalies.

9. Procédé selon l'une quelconque des revendications 1 à 8, dans lequel le procédé comprend une étape de caractérisation de chaque anomalie détectée par calcul d'au moins une caractéristique parmi : la sévérité de l'anomalie, la fréquence de l'anomalie, et les signaux du ou des capteurs (16) dans le(s)quel(s) l'anomalie a été détectée.

10. Dispositif de surveillance (12) de l'état de santé d'un système (10) dans un environnement (E), le système (10) comprenant au moins une machine (14), le dispositif de surveillance (12) comprenant un réseau de capteurs (15) dans l'environnement (E) du système (10) et un calculateur (18), le dispositif de surveillance (12) étant configuré pour mettre en œuvre un procédé de surveillance selon l'une quelconque des revendications 1 à 9.
